# EUROPEAN PATENT SPECIFICATION

(11) **EP 3 501 290 B1**
(45) Date of publication and mention of the grant of the patent: **25.06.2025**
(21) Application number: 18213260.5
(22) Date of filing: 18.12.2018
(51) Int. Cl.: A23C 9/156, A23C 9/16, A23L 2/395, A23C 21/04, A23C 21/08, A23G 1/00, A23G 1/40, C13B 50/00, A23L 21/12, A23L 21/15, A23L 29/30, A23L 19/00

(54) **MOLASSES POWDER AND A METHOD FOR PRODUCING THEREOF**
MELASSEPULVER UND VERFAHREN ZUR HERSTELLUNG DAVON
POUDRE DE MÉLASSE ET SON PROCÉDÉ DE PRODUCTION

(30) Priority: 21.12.2017 TR 201720995
(43) Date of publication of application: 26.06.2019
(73) Proprietor: Eti Gida Sanayi Ve Ticaret Anonim Sirketi, Odunpazari/Eskisehir (TR)
(72) Inventor: KANATLI, AHMET F RUZHAN, Eski ehir (TR)
(74) Representative: Yamankaradeniz, Kemal

(56) References cited:
- EP-A2- 0 052 919
- WO-A1-2008/059064
- GB-A- 1 055 772
- JP-A- S61 216 657
- RU-C1- 2 150 508
- US-A- 1 983 434
- US-A- 6 123 980
- DATABASE GNPD [online] MINTEL; 14 June 2017 (2017-06-14), ANONYMOUS: "Molasses and Cocoa in Envelopes", XP055574850, retrieved from www.gnpd.com Database accession no. 4884323

## Description

### Technical Field

The invention is related to the "Molasses Powder" with maximum 3% moisture content, and use of the said molasses powder in chocolate, fat-based filler, candy or bakery product; and method to produce a molasses powder having a maximum of 3% moisture .

### State of the Art

The molasses is an intensive and sweet syrup specific to Anatolia, produced by crushing and boiling such as sweet fruits for example grape, rose hip, carob or mulberry or the agricultural products for example sugar beet, juniper berries that can be transformed into sugar.

The basis of the Turkish desserts was the molasses before sugar. Therefore, the molasses is one of the sweetest nutrients of our traditional nutritional culture and palatal delight during thousands of years. The molasses developed by the Turks for the protection of the food; on one hand provides the grape and stum that are spoiled quickly to be durable, on the other hand it helps to fulfill the requirement of sweet and sugar. The molasses is a sweet liquid that is obtained by boiling and thickening the fruit juice and it is widely produced from the grape. In addition to the grape, local molasses are produced from fruits such as mulberry, plum, apple, pear, sugar beet, watermelon, sugar millet and pomegranate. In recent years molasses is produced from the carob fruit. Particularly, there is syrup and a dessert similar to marmalade called arceuthos drupacea molasses that is obtained by boiling the matured cones of a tree species called arceuthos drupacea grown in the Taurus Mountains in the Southern Anatolia.

Although the production of the molasses is made during many years in Turkey in huge amounts, the production technique has not been changed yet and it does not fulfill the required technology in the whole country. Therefore the fruit juice obtained by various methods is heated after the addition of the molasses soil and then after filtering this, it is left for thickening in boilers left on open flame. The molasses obtained in the manner is very fluid and it has a brunette color. The brunette color in the molasses is due to caramelisation occurred as a result of the reaction of the sugar and acids in the molasses with other substances due to its boiling in open containers with high degrees. In addition to the fresh and dried grape, mulberry, fig, carob, molasses is produced from sugary products such as apple, plum, watermelon, sugar beet, sugar millet.

The molasses is a good carbohydrate and energy source due to its high sugar content. The molasses particularly meets the vitamin and most of the mineral requirement such as calcium, potassium, chrome and magnesium. Moreover it is proposed to be included in the nutrition of the pregnant women and nursing women and people that are in recovery period due to its high vitamin and mineral amount and high absorption ratios.

Today in chocolate, fat-based filler, candy and bakery products, various ingredients in solid or liquid forms based on the final product moisture content and processing conditions, are used. The ingredients with high moisture content affect the rheological and taste features of both the mixture or the paste and the final product negatively. Particularly in the production of the chocolate and the products with chocolate, it is avoided to use water and products with high moisture content. The reasons for this situation is that; the water presence in the final chocolate product decreases the melting temperature of the chocolate and decreases the heat resistance; affects it crystal structure and rheological features (viscosity, yield point), the sucrose is dissolved and recrystallization occurs on the surface when the chocolate comprises water, by sugar flowering in the chocolate changes both the physical and the taste features of the chocolate negatively.

Particularly in some products such as chocolate, fat-based filler, candy, one of the ingredients to be used especially in solid form is sweetening agents such as crystal sugar (sucrose) or dried glucose- fructose syrup. However the disadvantage of said sweetener agents is that; they do not carry the nutritional elements such as vitamin and mineral together with them. Therefore they only give energy so that they are named as "empty energy source".

Another sweetening alternative is molasses which is in semi - flowing form. Molasses is a natural sweetener because of high sugar concentration it has, and it is used in flour products, sweet products and various sauces as colouring agent and natural preserver instead of artificial colouring agents like caramel increasing nutrition value.

As shown in Table 1 below, besides constituents of sweeteners features, grape molasses also contains vitamins and minerals in various types (sucrose, fructose, glucose etc.)

**Table 1: Constituents of Grape Molasses and their rates**

| *Constituents of Grape Molasses* | **Average Amount in a 100 g Molasses** |
|---|---|
| **Water** | 24.7 g |
| **Total carbohydrate** | 74,7 g |
| Fructose | 31.75 g |
| Glucose | 32.38 g |
| Sucrose | 8.02 g |

| **Vitamins** | |
|---|---|
| Thiamin | <0.04 mg |
| Colin | <13.3 mg |
| Niacin | <0.9 mg |
| Pantothenic acid | <0.8 mg |
| Vitamin B-6 | <0.7 mg |

| **Minerals** | |
|---|---|
| Calcium | 132.0 mg |
| Iron | 1.45 mg |
| Zinc | 0.12 mg |
| Potassium | 929.0 mg |
| Phosphor | 31.0 mg |
| Magnesium | 73.0 mg |
| Copper | 0.39 mg |
| Manganese | 0.62 mg |

However since the molasses is a fluid with high viscosity and adhesiveness, it creates some disadvantages during the product processing. This situation limits the usage areas of the molasses within the industry. Particularly when it is used in the products such as chocolate, filler, the mixed product both cannot be processed and its shelf life becomes problematic due to the fact that the molasses increase the water content in the product. In addition to this, it is impossible to use the molasses in dry food mixtures such as bread, cake, cookie powder mixtures, breakfast cereals, baby formulas.

After eliminating these disadvantages, in order to use the molasses in these products as a sweetening, concentrating, protecting or coloring and flavoring agent can also be possible by decreasing its moisture content by drying and by making its powder. Together with transforming the molasses into powder form, not only it can be possible to use it as a food additive but also its fields of usage will become widespread due to its easy handling and storage.

The molasses powders to be obtained by the present technique include some disadvantages. One of them is that; the fructose with a 30% amount by weight causes adhesiveness and thus agglomeration in the final product during and after the drying process. The reason for this is that; the glass transition temperature of the fructose is low (5°C). The glass transition temperature is the temperature limit that the substance loses its glass features and gains viscous features. The lower the glass transition temperature of the substance, the more difficult it is to dry the substance due to an increase in its adhesiveness.

Another disadvantage in the current applications preferred for drying the food that contains fructose like molasses is that; generally substances such as maltodextrin, starch, gum (gum Arabic), gelatin, and silicone dioxide are used as an elimination agent for adhesiveness. However; these substances that are used as a drying agent in the state of the art, cause agglomeration. Maltodextrin is one type polysaccharide that is classified as a food additive. It is produced by partly hydrolyzing the starch. If the sweetness level of the sucrose is considered as 100 units, the sweetness level of maltodextrin molecules that have different polymer chain dimensions vary between 5-36 units. A disadvantage of said maltodextrin is that; it has a starch type taste. This condition affects the physical features (color, rigidity etc.) and taste integrity of the final product negatively wherein molasses powder is used as a sweetening ingredient. Also using carriers such as maltodextrin, starch etc. in some products such as chocolate etc. in which molasses powder is used as a sweetener affects the product quality negatively by changing the character of the chocolate's melting in the mouth namely by changing its crystal stricture.

When a literature search is made in the relevant art in terms of the subject, the following patent application is found.

The invention in the national patent application No TR2012/10120 titled '*The production of bakery products with carob (harnup) molasses pulp addition'* is related to produce a product with a high value added by means of drying the fruit pulp of the carob, making flour from it by grinding and adding this to the bakery products consumed widely in daily lives of the people. However in said patent application there is no suggestion in terms of using the molasses as a sweetener in powder form; its usage as a fiber additive after making flour from the pulp remained from the molasses production, is described.

The Japanese patent application No JPS61216657A relates to a method for imparting a rich flavor to foods. The said method describes that raw material liquids using molasses (cane molasses or beet molasses) obtained by extracting sugar as crystals from the juice of rapeseed and cheese whey, which may or may not be lactic acid fermented, either alone or in combination, are subjected to electrodialysis to collect full body flavor imparting substances in liquid C (liquid in which electrolytes are concentrated), which are then concentrated or dried with or without being decolorized. However in said patent, there is no mention of the molasses is obtained by concentrating of at least one fruit juice selected from the group consisting of grapes, apple, plum, apricot, melon, fig, arceuthos drupacea, carob.

The document titled "Molasses and Cocoa in envelopes" was found during the research discloses instant beverage products in powdered form consisting of a mixture of molasses and cocoa powder. However, there is no mention of the molasses is obtained by concentrating of at least one fruit juice selected from the group consisting of grapes, apple, plum, apricot, melon, fig, arceuthos drupacea, carob. [DATABASE GNPD, 14 June 2017 anonymous: "Molasses and Cocoa in envelopes", Database accession no. 4884323, from www.gnpd.com]

The US patent application no US1983434A elated to an edible product in the form of powdered molasses to be used in small-cattle livestock and poultry feeding, and a method and apparatus operating under vacuum to prepare the mentioned product. However, in the document, only the powderization of the molasses is mentioned. There is no mention of the Molasses Powder with a maximum moisture content of 3%.

In the Chinese patent application No CN103392958 (A) titled '*Grape Jelly and Process Method*', the invention describes the grape jelly and its processing method. The grape jelly is prepared from the following raw materials: 20-35 % grape juice, 1-5% fruit granule, 0.1-2 % plant juice, 8-15% powder with gelatin, 0.5-5% gel, 18-30% sweetener, 0.2-1 % citric acid and balance water. The grape jelly is obtained by the following steps; taking the grape juice, fruit granules, plant juice and gelatin powder as the raw material and adding hereto a sweetener and citric acid, subjecting to a pre-process, mixing and filling by means of spices. However in said patent, the final product obtained is an edible food product that is jelly based on grape juice. The form of the product obtained is not suitable to be used as a natural sweetener in the food industry.

Consequently due to the abovementioned disadvantages and the inefficiency of the current solutions concerning this issue, it is required to make an improvement in the relevant field related to the production of the molasses powder.

### Aim of the Invention

The present invention is related to a molasses powder and the production method thereto as defined in the appended claims, that fulfills the abovementioned requirements, eliminates all disadvantages and brings some additional advantages.

The particular aim of the present invention is to use the molasses powder in chocolate, fat based filler, candy and bakery products with maximum 3% moisture content that has a sweetener feature and protects its natural aroma and nutritional features and to provide a method for producing this powder.

The aim of the invention is to produce the molasses powder with a carrier agent selected from milk and/or milk powder and/or whey and/or whey powder and/or cacao powder instead of substances such as maltodextrin, starch, gum (gum Arabic), gelatin, and silicon dioxide. Due to the fact that lactose (101°C) in the milk powder has a higher glass transition temperature than fructose (5°C) and the cacao powder comprises average 33% fiber, these ingredients in the final product molasses powder prevent adhesiveness and therefore the agglomeration.

Another aim of the invention is to provide a final product that does not have a starchy taste due to its not comprising any maltodextrin. In this case, this affects the physical features (color, rigidity etc.) and taste integrity of the final product in a positive manner.

Another aim of the invention is to decrease the number of the useless ingredients ( without maltodextrin, starch, gum etc.) in the final product by using milk and/or milk powder and/or whey and/or whey powder and/or cacao powder as an agent for preventing the adhesiveness in the final product wherein the molasses powder will be used.

A similar aim of the invention is to prevent the adhesiveness by means of the lactose in the milk powder with a high glass transition temperature and the fiber in the cacao powder.

Another aim of the invention is to provide a molasses powder that both has a sweetening feature and protects many nutritional features such as vitamin, mineral.

Another aim of the invention is to eliminate the need for extra production steps such as encapsulation in order to reduce adhesiveness. Therefore, the molasses powder production can be made by means of lesser process steps.

A similar aim of the invention is to have a molasses powder whose color, aroma and nutritional values are damaged lesser than the dried ones by means of the traditional methods (band dryer, spray drier etc.); if particularly any of the drying methods under vacuum is selected as a drying system (band drying under vacuum, spray drying under vacuum etc.).

In order to fulfill the aims mentioned above, the invention is directed to a molasses powder with maximum 3% moisture content, the powder consists of 80-20 % by weight molasses wherein the molasses is obtained by concentrating of at least one fruit juice selected from the group consisting of grapes, apple, plum, apricot, melon, fig, arceuthos drupacea, carob; and 20-80 % by weight of a carrier agent selected from the group consisting of milk, milk powder, whey, whey powder and cacao powder or a combination thereof.

The invention is also directed to a method to produce a molasses powder having a maximum of 3% moisture and consisting of
- molasses, wherein the molasses is obtained by concentrating of at least one fruit juice selected from the group consisting of grapes, apple, plum, apricot, melon, fig, arceuthos drupacea, carob; and
- a carrier agent selected from the group consisting of milk, milk powder, whey, whey powder and cacao powder or a combination thereof;
wherein the method comprises the following process steps;
a) mixing 80-20 % by weight of molasses with 20-80 % by weight of carrier agent,
b) then subjecting this mixture to a drying process.

The structural and characteristic features of the present invention will be understood clearly by the following drawings and the detailed description made with reference to these drawings and therefore the evaluation shall be made by taking these figures and the detailed description into consideration.

### Figures Clarifying the Invention

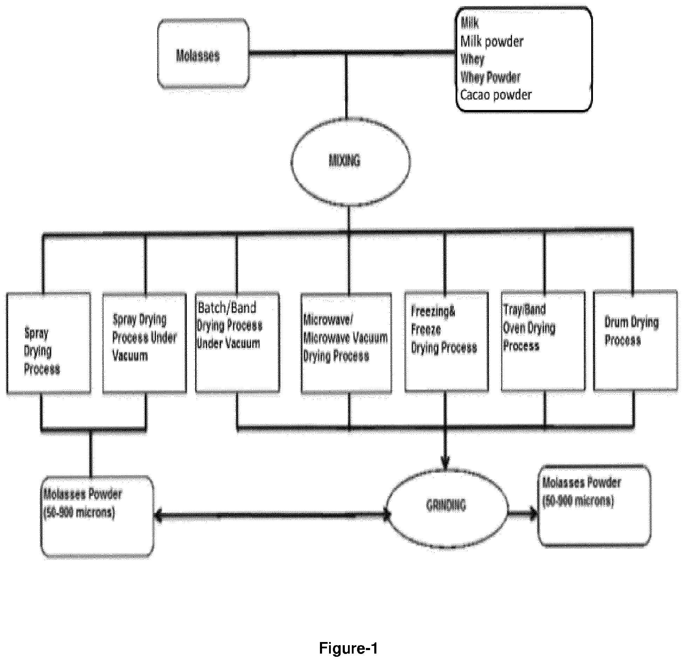

**Figure 1****:** is a flowchart of production of the molasses powder of the present invention. The drawings shall not be scaled necessarily and the details that are not required for understanding the present invention can be omitted. Apart from this, elements that are at least substantially identical or at least having substantially similar functions are shown with the same numeral.

### Detailed Description of the Invention

In this detailed description, molasses powder of the present invention and the preferred embodiments of the production method of this powder are only described for clarifying the subject and without any limitation.

The invention is related to the molasses powder with maximum 3% moisture content that has a sweetening feature and protects its natural aroma and nutritional features and the method for producing this powder to be used in the chocolate, fat-based filler, candy and bakery products.

*The characteristic of the molasses powder of the present invention is that;* a single item or combinations of the items selected from the following group; milk, milk powder, whey, whey powder and cacao powder is used as an agent that eliminates the adhesiveness in the final product wherein molasses power will be used. Therefore in the final product, adhesiveness and thus the agglomeration of the molasses powder are eliminated.

**Table 2: The dry material content of the molasses powder of the present invention in a mixed form before drying**

| **Raw material** | **Usable amount in weights (%)** |
|---|---|
| Molasses | 20-80 |
| carrier agent (Single units or combinations formed by milk, milk powder, cacao powder, whey and whey powder) | 80-20 |

For example; according to Table 2 given above, in one embodiment of the molasses powder of the present invention, when 40% molasses by weight is used in the mixture before drying, the rest amount consists of 60% from the following group selected as a single item or a combination of items; such as milk and/or milk powder and/or cacao powder and/or whey and/or whey powder.

### Raw material of the present invention and their features:

### Molasses:

The molasses is a traditional product that is unique to our country and obtained by boiling and thickening the fruit juices. The molasses is mostly produced from the grape juices. The fruits that comprise high amounts of sugar such as apple, plum, apricot, melon, sugar beet, and fig are preferred in the production of molasses. Generally molasses is made from the arceuthos drupacea that grows in Taurus Mountains and carob. The molasses is the concentrated form of the fruit juices and it has long shelf life, it is produced by means of boiling naturally without any food additive and sugar.

Due to its comprising high amounts of sugar, mineral and organic acid, the molasses is an important food in the nutrition of human. The molasses includes various kinds of vitamins and minerals besides the ingredients that include sweetening feature (fructose, glucose, sucrose etc.). The molasses meets most of the daily requirement of calcium, iron, potassium and magnesium with its rich mineral content.

Approximately 100 % of the sugar in the grape molasses, and 80% of the sugar in the other kinds of molasses consists of monosaccharaides such as glucose, fructose. Therefore the molasses is a food with high energy value that can mix with the blood by being absorbed easily within the digestion system. The nutritional values of the molasses varies according to the fruit used during its production, it is very rich in terms of calories, when we consider this, 1 kg molasses has approximately 2,250 kcal energy value. This value is lower when it is compared with sucrose (3,900 kcal/kg) that has the same sweetening degree. Due to this sugar content, the molasses has hygroscopic (humectant) feature.

The moisture in the sweeteners that include liquid sugars such as the molasses is decreased by using some agents that help drying. The sweetener is dried until the required moisture ratio (< %3) is obtained. The food additives such as the maltodextrin, gum Arabic can be used as a carrier agent. However as previously mentioned the relevant food additives have some disadvantages and they have some features that are in contradiction with the chocolate item.

The most important characteristic of the molasses powder is that; it is distinguished from the other sugar sources with sweetening feature in terms of its protecting many nutritional features such as vitamin mineral. However, for example crystal sugar (sucrose) or other sweeteners such as dried glucose-fructose syrup do not have nutritional values such as vitamin, mineral and therefore they are referred as being "an empty energy source".

### The carrier agent that eliminates adhesiveness (milk and/or milk powder and/or cacao powder and/or whey and/or whey powder)

They are the agents used for decreasing the hygroscopic (humectant) features, during the production and storage of the molasses powder. The added carrier agent makes the drying process easier by changing the physical features of the ingredients within the molasses.

*In the production of the molasses powder of the present invention,* the ingredients such as milk and/or milk powderand/or whey and/or whey powder and/or cacao powder included within the final product as the carrier agent are used wherein the molasses powder will be used. Because the lactose (101°C) in the milk between approximately 36-52 % (w/w) has a higher glass transition temperature than the fructose (5°C); and the cacao powder has a fiber content of approximately 33%, these ingredients prevent the adhesiveness and thus the agglomeration of the molasses powder in the final product.

*Particularly if as a drying method for the molasses* spray drying method is preferred, these agents not only prevent the powder particles to adhere each other but also it prevents the particles to attach onto the dryer surface.

### The production method of the molasses powder of the present invention:

- mixing the molasses with a single item or combinations of the items selected from the following group; milk, milk powder, whey, whey powder and cacao powder that are included within the final product wherein the molasses powder will be used,
- then subjecting this mixture to a drying process up to maximum 3% moisture content,

*The drying process of the molasses mixture can be performed in three ways:*
- *Spray drying process,* is based on spraying the liquid samples within a hot air environment and for example by the evaporation of the water within its content the product is obtained as a powder. The sample suspension that is sprayed can be in emulsion or solution form, the obtained product is in particle and granule form. It is the only dryer type wherein the powder particles are in micron dimension and with low moisture content. If the system is operated under vacuum, the drying process can be performed at lower temperatures.
   *Spray Drying Process*
   Nozzle size: 1 mm
   Nozzle pressure: 1000-1400 psig
   System entrance temperature: 140-170°C
   System exit temperature: 75-95°C
   Air flow velocity: 180-220 m³/hours
   (Parallel flow system)
- The product that is planned to be dried *with the other drying technique namely rotary drum drying technique* is distributed on the heated cylinder surface homogenously and with a thin layer. The drying process is realized on the rotary cylinder surface. The system is suitable for materials with high viscosity and high adhesiveness. In the surface that reaches high temperature, due to its short contact period, the product structure damages slightly. There is a scraper blade that scrapes the dried layer on the surface. The scrapped dried layers by means of the blade are grinded until the required particle size is obtained.
   *Rotary Drum Drying Process*
   Cylinder surface temperature: 120-180 °C
   Product thickness on the cylinder: (0,01-0,05) mm
- *In tray or band drying processes* after the drying process a porous cake formation occurs. These big cake masses must be grinded as an additional process.
   *Tray*/*Band Oven Drying Process*
   Oven temperature: 90-130°C
   Oven residence time: 3-12 hours

It is possible to obtain molasses powder with lower temperature parameters by adding vacuum to the drying process (for example; spray drying under vacuum, band drying under vacuum, vacuum-microwave dries system etc.) than the systems without vacuum. Together with the system with vacuum, drying is performed at a lower temperature, a high color quality, intense aroma and lesser nutritional value loss is obtained.
*Spray Drying under Vacuum Process*
   System entrance temperature: 50-80°C
   Vacuum: 0.5-0.6 bar
   Nozzle size: 1 mm
   Air flow velocity: 25-30 m³/hour
   *Batch*/*Band Drying under Vacuum*
   Condenser temperature: -50°C
   Pressure: 05-40 mbar
   Temperature: 70-180°C
   Duration: 15-90 minutes
   Band velocity can be adjustable.
*Microwave*/*Microwave-Vacuum Drying Process*
   Microwave power: 500-850 W
   Air temperature: 50-125°C
   Vacuum pressure: 20-50 mmHg
*Freeze Drying Process*
   Freezing the mixture: (-18-(-80)°C)
   Cake thickness: 4-20 mm
   Condenser temperature: -55°C
   Vacuum pressure: 0,018 mBar

*The raw material ratios included within the molasses powder content after the drying process do not change in the basis of the dry material as it can be seen in the following Table 3:*

**Table 3: The content of the molasses powder as a dry material after the drying process**

| **Raw material** | **The usable amounts in weights (%)** |
|---|---|
| Molasses | 20-80 |
| Selected from the following group individually or in combinations; milk and/or milk powder and/or whey and/or whey powder and/or cacao powder | 80-20 |

| | |
|---|---|
| • Adding water (when milk powder and/or whey powder and/or cacao powder are selected in the mixture then water addition is made) | |

The usage of water in the prescription is based on the drying technique type. *In the production of the present invention, if spray drying method is used, then in order to make the drying process easily, water shall be added to the starting mixture when milk powder and*/*or whey powder and*/*or cacao powder are selected. In a preferred embodiment of the invention, maximum a ratio of 88 %* *water can be added.*
- Perform grinding when required.
(the particle dimension of the porous dried molasses cake obtained as a result of particularly the tray and band drier must be grinded until they become 50-900 microns)

In the molasses powder obtained after the drying process, there is a caramel aroma besides the molasses aroma based on the caramelisation occurred (the starting temperature of caramelisation for fructose is 110°C; the starting temperature of caramelisation for galactose, glucose and sucrose is 160°C; the starting temperature of caramelisation for maltose is 160°C) as a result of boiling the stum with a high temperature during molasses making. Also when milk and/or milk powder and/or whey and/or whey powder is used in the mixture, then there can be milk aroma in the molasses powder due to these ingredients.

## Claims

1. A molasses powder with maximum 3% moisture, wherein the powder consists of:
- 80-20 % by weight molasses, wherein the molasses is obtained by concentrating of at least one fruit juice selected from the group consisting of grapes, apple, plum, apricot, melon, fig, arceuthos drupacea, carob; and
- 20-80 % by weight of a carrier agent, wherein the carrier agent is selected from the group consisting of milk, milk powder, whey, whey powder and cacao powder or a combination thereof.

2. The molasses powder according to claim 1, wherein the powder has a particle dimension of 50-900 microns.

3. Use of a molasses powder in chocolate, fat-based filler, candy or bakery product; wherein the molasses powder has maximum 3% moisture, and consisting of:
- 80-20 % by weight molasses, wherein the molasses is obtained by concentrating of at least one fruit juice selected from the group consisting of grapes, apple, plum, apricot, melon, fig, arceuthos drupacea, carob; and
- 20-80 % by weight a carrier agent, wherein the carrier agent is selected from the group consisting of milk, milk powder, whey, whey powder and cacao powder or a combination thereof.

4. The use according to claim 3, wherein the powder has a particle dimension of 50-900 microns.

5. A method to produce a molasses powder having a maximum of 3% moisture and consisting of:
- molasses, wherein the molasses is obtained by concentrating of at least one fruit juice selected from the group consisting of grapes, apple, plum, apricot, melon, fig, arceuthos drupacea, carob; and
- a carrier agent selected from the group consisting of milk, milk powder, whey, whey powder and cacao powder or a combination thereof;
wherein the method comprises the following process steps;
a) mixing 80-20% by weight the molasses with 20-80% by weight the carrier agent,
b) subjecting the mixture to a drying process.

6. The method according to claim 5, wherein a grinding is performed after drying process until the particle dimension becomes 50-900 microns.

## Patentansprüche

1. Melassepulver mit einem Höchstwert von 3 % Feuchtigkeit, wobei das Pulver aus Folgendem besteht:
- 80-20 Gew.-% Melasse, wobei die Melasse erlangt ist durch Konzentrieren von mindestens einem Fruchtsaft ausgewählt aus der Gruppe bestehend aus Trauben, Apfel, Pflaume, Aprikose, Melone, Feige, Arceuthos drupacea, Johannisbrot; und
- 20-80 Gew.-% eines Trägermittels, wobei das Trägermittel ausgewählt ist aus der Gruppe bestehend aus Milch, Milchpulver, Molke, Molkepulver und Kakaopulver oder einer Kombination davon.

2. Melassepulver nach Anspruch 1, wobei das Pulver eine Partikeldimension von 50-900 Mikron aufweist.

3. Verwendung eines Melassepulvers in Schokolade, Füllstoff auf Fettbasis, Süßigkeiten oder Backwaren; wobei das Melassepulver einen Höchstwert von 3 % Feuchtigkeit aufweist und aus Folgendem besteht:
- 80-20 Gew.-% Melasse, wobei die Melasse erlangt ist durch Konzentrieren von mindestens einem Fruchtsaft ausgewählt aus der Gruppe bestehend aus Trauben, Apfel, Pflaume, Aprikose, Melone, Feige, Arceuthos drupacea, Johannisbrot; und
- 20-80 Gew.-% eines Trägermittels, wobei das Trägermittel ausgewählt ist aus der Gruppe bestehend aus Milch, Milchpulver, Molke, Molkepulver und Kakaopulver oder einer Kombination davon.

4. Verwendung nach Anspruch 3, wobei das Pulver eine Partikeldimension von 50-900 Mikron aufweist.

5. Verfahren zum Herstellen eines Melassepulvers, das einen Höchstwert von 3 % Feuchtigkeit aufweist und aus Folgendem besteht:
- Melasse, wobei die Melasse erlangt ist durch Konzentrieren von mindestens einem Fruchtsaft ausgewählt aus der Gruppe bestehend aus Trauben, Apfel, Pflaume, Aprikose, Melone, Feige, Arceuthos drupacea, Johannisbrot; und
- einem Trägermittel, das ausgewählt ist aus der Gruppe bestehend aus Milch, Milchpulver, Molke, Molkepulver und Kakaopulver oder einer Kombination davon;
wobei das Verfahren die folgenden Vorgangsschritte umfasst;
a) Mischen von 80-20 Gew.-% der Melasse mit 20-80 Gew.-% des Trägermittels,
b) Unterziehen des Gemisches einem Trocknungsvorgang.

6. Verfahren nach Anspruch 5, wobei nach dem Trocknungsvorgang ein Mahlen durchgeführt wird, bis die Partikeldimension zu 50-900 Mikron wird.

## Revendications

1. Poudre de mélasse avec un maximum de 3 % d'humidité, dans laquelle la poudre est constituée de :
- 80 à 20 % en poids de mélasse, dans laquelle la mélasse est obtenue par concentration d'au moins un jus de fruit choisi dans le groupe constitué par le raisin, la pomme, la prune, l'abricot, le melon, la figue, l'arceuthos drupacea, la caroube ; et
- 20 à 80 % en poids d'un agent support, dans laquelle l'agent support est choisi dans le groupe constitué par le lait, le lait en poudre, le lactosérum, la poudre de lactosérum et la poudre de cacao ou une de leur combinaisons.

2. Poudre de mélasse selon la revendication 1, dans laquelle la poudre comporte une dimension de particule de 50 à 900 microns.

3. Utilisation d'une poudre de mélasse dans le chocolat, la garniture à base de matières grasses, les bonbons ou les produits de boulangerie ; dans laquelle la poudre de mélasse comporte un maximum de 3 % d'humidité et est constituée de :
- 80 à 20 % en poids de mélasse, dans laquelle la mélasse est obtenue par concentration d'au moins un jus de fruit choisi dans le groupe constitué par le raisin, la pomme, la prune, l'abricot, le melon, la figue, l'arceuthos drupacea, la caroube ; et
- 20 à 80 % en poids d'un agent support, dans laquelle l'agent support est choisi dans le groupe constitué par le lait, le lait en poudre, le lactosérum, la poudre de lactosérum et la poudre de cacao ou une de leur combinaisons.

4. Utilisation selon la revendication 3, dans laquelle la poudre comporte une dimension de particule de 50 à 900 microns.

5. Procédé de production d'une poudre de mélasse comportant un maximum de 3 % d'humidité et étant constitué :
- de mélasse, dans lequel la mélasse est obtenue par concentration d'au moins un jus de fruit choisi dans le groupe constitué par le raisin, la pomme, la prune, l'abricot, le melon, la figue, l'arceuthos drupacea, la caroube ; et
- d'un agent support choisi dans le groupe constitué par le lait, le lait en poudre, le lactosérum, la poudre de lactosérum et la poudre de cacao ou une de leur combinaisons :
dans lequel le procédé comprend les étapes de traitement suivantes ;
a) le mélange de 80 à 20 % en poids de la mélasse avec 20 à 80 % en poids de l'agent support,
b) la soumission du mélange à un processus de séchage.

6. Procédé selon la revendication 5,
dans lequel un broyage est effectué après le processus de séchage jusqu'à ce que la dimension de particule atteigne 50 à 900 microns.
